# EUROPEAN PATENT SPECIFICATION

(11) **EP 3 045 312 B1**
(45) Date of publication and mention of the grant of the patent: **15.04.2020**
(21) Application number: 14844353.4
(22) Date of filing: 21.08.2014
(51) Int. Cl.: B32B 27/32, B65D 65/40, B65D 81/24, B32B 7/12

(54) **BARRIER LAMINATE AND PACKAGING MATERIAL USING SAME**
BARRIERENLAMINAT UND VERPACKUNGSMATERIAL DAMIT
STRATIFIÉ DE PROTECTION ET MATÉRIAU D'EMBALLAGE EMPLOYANT CELUI-CI

(30) Priority: 10.09.2013 JP 2013187336
(43) Date of publication of application: 20.07.2016
(73) Proprietor: DIC Corporation, Tokyo 174-8520 (JP)
(72) Inventor: USUI Tatsuhiko, Satte-shi Saitama 340-0121 (JP); MATSUBARA Hiroaki, Satte-shi Saitama 340-0121 (JP)
(74) Representative: Beckmann, Claus
(86) International application number: PCT/JP2014/071905
(87) International publication number: WO 2015/037409

(56) References cited:
- WO-A1-2013/012037
- JP-A- H0 872 210
- JP-A- H1 170 624
- JP-A- H09 272 188
- JP-A- 2000 334 890
- JP-A- 2002 301 796
- JP-A- 2006 525 143
- JP-A- 2008 221 606
- JP-A- 2009 045 762
- JP-A- 2011 162 656
- JP-A- 2011 162 656
- JP-A- 2011 230 380
- US-A1- 2008 044 606
- US-A1- 2008 063 825

## Description

### Technical Field

The present invention is defined in the appended claims. The present invention relates to, with respect to a laminate formed by attaching a substrate and a sealant film, a barrier laminate which can effectively suppress elution of components such as an adhesive or printing ink to contents and a packaging material formed by using the same.

### Background Art

As a packaging material for a food product, a flexible package using a plastic material is globally used and there is a tendency that the use thereof increases as the flexible package is spread to developing countries. Meanwhile, a case has been reported, in which a substance that may have negative effects on the health of a human elutes from a certain packaging material and migrates to the food product. Examples of the elution include elution of bisphenol A caused by a coating material on the inner surface of tableware or cans, elution of the printing ink component, and elution of a mineral oil incorporated into a carton box, and consumer awareness on the safety and sanitation of packaging materials has been growing.

In Europe, regulations of packaging materials which come into contact with food products have been strengthening, and the regulations relating to plastic materials and products are revised as a commission regulation (EU No.10/2011) and the regulations will be completely established over the next few years. In addition, evaluation and study on elution properties or safety of the printing ink and the laminate adhesive which do not come directly into contact with food products have been performed and it is estimated that such materials which do not come into contact with food products will also be regulated. In the commission regulation relating to plastic materials and products, elution from a plastic film which is a complex obtained by lamination with an adhesive, is regulated and consideration of materials which do not come into contact with food products is required as well. In addition, Switzerland has an elution regulation relating to a component such as an ink and an adhesive, known as Swiss ordinance SR817.023.21, and it has been significantly necessary to be in compliance of the regulation for sales activities in Europe.

Under these circumstances, a complex film in which a sealant film using a cyclic olefin copolymer is laminated on a substrate is suggested as a low-elution packaging material (for example, refer to PTL 1).

However, sufficient barrier properties and the sealing strength of a packaging material may not be exhibited depending on a combination of the cyclic olefin copolymer and a sealant polymer, or the thickness ratio thereof. In addition, in the Examples, the ratio of the cyclic olefin copolymer layer to the thickness of the sealant film is high, excessive costs are expected, and further, the total thickness as the packaging material becomes increased. Thus, it cannot be said that the sealant film is an environmentally friendly packaging material.

In addition, water is air-tightly packaged in the low-elution packaging material, extraction is performed under a specific condition, and then the resultant is concentrated, and the evaluation of a low molecular weight substance is performed using a peak area of the UV absorption spectrum and gas chromatography mass spectrometry (GC-MS). However, the eluted substance is unclear, and suppression of the substance which is a specific control subject in Europe is not mentioned.

### Citation List

### Patent Literature

[PTL 1] JP-A-2001-162724
[PTL2] US-A1-2008063825
[PTL3] JP-A-2008221606

### Summary of Invention

### Technical Problem

Taking the above situation into consideration, a problem to be solved by the present invention is to provide a barrier laminate which is formed by laminating a sealant film and a substrate and can effectively suppress elution of adhesive components which are a specific control subject, while keeping a sealing strength necessary for a general laminate packaging material; and a packaging material formed by using the same.

### Solution to Problem

As a result of a diligent study in order to solve the problem, the present inventors found that, with respect to a laminate having a configuration of a substrate/adhesive layer/sealant film, a multilayer film including a layer formed by using a specific cyclic olefinic resin in the sealant film can effectively suppress elution of a component from the adhesive layer, even if the thickness of the layer containing the cyclic olefinic resin is thin, and can prevent the migration of the subject substance designated as a specific control subject to the contents; and sealing properties can be satisfactory by appropriately setting the thickness of the sealing layer, thereby completing the present invention.

That is, the present invention provides a barrier laminate that is formed by laminating the surface of a laminate layer (A) side of a multilayer film (I) with a substrate film (II) using an adhesive, in which the multilayer film (I) is formed by laminating the laminate layer (A) which includes an olefinic resin (a1) not having a cyclic structure as a main component, an intermediate layer (B) which includes 70% by mass or more of a cyclic olefinic resin (b1) having a glass transition temperature Tg of 70°C to 160°C as a resin component, and a sealing layer (C) which includes an olefinic resin (c1) not having a cyclic structure as a main component in the order of (A) / (B) / (C) ; and the total thickness of the multilayer film (I) is from 20 to 50 µm, the thickness ratio of the intermediate layer (B) is from 0.5% to 10%, and the thickness of the sealing layer (C) is 3 µm or more; and a packaging material formed by using the same.

### Advantageous Effects of Invention

The laminate of the present invention can effectively capture a substance which has high possibility of eluting from the adhesive, while having a proper sealing strength as the packaging material, and suppresses the migration to the contents. Therefore, the laminate of the present invention can be appropriately used as an environmentally friendly packaging material, which includes a food product or medical product as the contents.

### Description of Embodiments

Hereinafter, each portion configuring the laminate of the present invention will be described in detail.

The laminate of the present invention has a configuration including a substrate/adhesive layer/ multilayer film. The multilayer film is formed as a film having a layer structure of at least three layers, and a barrier laminate is formed by laminating the film with other substrates by various methods.

In the multilayer film (I) to be used in the present invention, a laminate layer (A)/intermediate layer (B)/ sealing layer (C) are laminated in this order, and a resin layer may be further provided between the respective layers according to the necessity.

The laminate layer (A) includes an olefinic resin (a1) not having a cyclic structure as a main component. In the present invention, "including a specific resin as a main component" means that the specific resin is contained in an amount of 65% by mass or more, preferably 80% by mass or more with respect to the total amount of the resin component forming the layer.

Examples of the olefinic resin (a1) include various ethylene-based resins and propylene-based resins, from a viewpoint of film forming properties at the time of laminating the resin with a cyclic olefinic resin (b1) to be used in the intermediate layer (B) described below, in particular, forming a multilayer film by co-extrusion molding easily, and preventing peeling between the layers in the multilayer film, an ethylene-based resin having a density of more than 0.880 g/cm² and less than 0.940 g/cm² and or an ethylene-α-olefin random copolymer polymerized by using a single site catalyst is preferable, and an ethylene-based resin is particularly preferable.

Examples of the ethylene-based resin include polyethylene resins such as ultra-low density polyethylene (VLDPE), linear low density polyethylene (LLDPE), low density polyethylene (LDPE), linear intermediate density polyethylene (LMDPE), and intermediate density polyethylene (MDPE) ; and an ethylene-vinyl acetate copolymer (EVA), and the resin may be used alone or two or more thereof may be used in combination. Among these, LLDPE is preferable in order to obtain a satisfactory balance between the film forming properties and suppression of the migration of the adhesive component to the contents.

LDPE may be a branched low density polyethylene obtained by a high pressure radical polymerization method and is preferably a branched low density polyethylene obtained by homopolymerization of ethylene by the high pressure radical polymerization method.

LLDPE is obtained by copolymerization of an ethylene monomer as a main component and α-olefin such as butene-1, hexene-1, octene-1, and 4-methylpentene as a comonomer by a low pressure radical polymerization method using a single site catalyst. The content of the comonomer in LLDPE is preferably in a range of 0.5 to 20 % by mol and more preferably in a range of 1 to 18% by mol.

Examples of the single site catalyst include various single site catalysts including metallocene catalysts, for example, a combination of a metallocene compound of the transition metals of group IV or V in the periodic table with an organic aluminum compound and/or ionic compound. In addition, since the single site catalyst has a uniform active site, a molecular distribution of the obtained resin is sharpened compared to a multisite catalyst having a non-uniform active site. Thus, the amount of a low molecular weight component precipitated at the time of forming a film is low, and a resin having physical properties excellent in the stability of the laminate strength and blocking resistant properties can be obtained. Thus, the single site catalyst is preferable.

As described above, the density of the ethylene-based resin is preferably from 0.880 to 0.940 g/cm³. If the density is within this range, proper rigidity is obtained, the mechanical strength such as pin hole resistant properties is excellent, and film forming properties and extrusion properties are improved. In addition, in general, the melting point is preferably in a range of 60°C to 130°C and more preferably from 70°C to 120°C. If the melting point is within this range, co-extrusion workability, packaging properties, and heat sealing properties are improved. In addition, the MFR (190°C, 21.18 N) of the ethylene-based resin is preferably from 2 to 20 g/10 minutes and more preferably from 3 to 10 g/10 minutes. If the MFR is within this range, extrusion molding properties of the film are improved.

By using the ethylene-based resin, transparency can be maintained when being laminated. Also, since the resin has flexibility, the pin hole resistant properties become satisfactory.

Examples of the propylene-based resin include a propylene homopolymer, a propylene·α-olefin random copolymer, for example, a propylene-ethylene copolymer, a propylene-butene-1 copolymer, a propylene-ethylene-butene-1 copolymer, and metallocene catalyst-based polypropylene. These respectively may be used alone or in combination. The propylene-α-olefin random copolymer is preferable and the propylene-α-olefin random copolymer polymerized by using the single site catalyst is particularly preferable. In a case where these propylene-based resins are used as the laminate layer (A), heat resistance can be improved and a softening temperature can be increased. Thus, the laminate can be preferably used as a lid having excellent steam/high pressure heating sterilization properties such as boiling at 100°C or lower, hot filling, or retort sterilization at 100°C or higher.

In addition, among these propylene-based resins, those having an MFR (230°C) of 0.5 to 30.0 g/10 minutes and a melting point of 110°C to 165°C are preferable, and those having an MFR (230°C) of 2.0 to 15.0 g/10 minutes and a melting point of 115°C to 162°C are more preferable. If the MFR and the melting point are within these ranges, the contraction of the laminate is less at the time of heat sealing and the film forming properties are further improved.

As described above, the laminate layer (A) includes polyolefin (a1) as a main component; however, other resins may be used in combination, for example, in a case of laminating with the other substrate using an adhesive or performing printing, from a viewpoint of improving adhesion of the laminate layer with the adhesive or the printing ink. Examples of the other resins that can be used at this time include an ethylene-based copolymer such as an ethylene-vinyl acetate copolymer (EVA), an ethylene-methyl methacrylate copolymer (EMMA), an ethylene-ethyl acrylate copolymer (EEA), an ethylene-methyl acrylate (EMA) copolymer, an ethylene-ethyl acrylate-maleic anhydride copolymer (E-EA-MAH), an ethylene-acrylic acid copolymer (EAA), and an ethylene-methacrylic acid copolymer (EMAA); an ionomer of the ethylene-acrylic acid copolymer, an ionomer of the ethylene-methacrylic acid copolymer, and a copolymer of a monomer having a cyclic olefin structure such as a norbornene-based monomer and ethylene or the like, which can be used as the resin for an intermediate layer (B) described below. These may be used alone or two or more thereof may be used in combination.

The intermediate layer (B) of the multilayer film (I) to be used in the present invention is a resin layer which contains 70% by mass or more of a cyclic olefinic resin (b1) having a glass transition temperature Tg of 70°C to 160°C as a resin component. By providing a layer which contains a large amount of the specific cyclic olefinic resin, sufficient barrier properties can be exhibited even if the thickness of the layer is thin.

The thickness ratio of the intermediate layer (B) with respect to the total thickness of the multilayer film is from 0.5% to 10%. By making the resin layer thin, the total thickness of the multilayer film (I) can be thinned, workability of the sealant film or laminate formed by laminating the sealant film and the substrate become satisfactory, or the ratio of using the cyclic olefinic resin having a relatively high cost can be reduced. Thus, productivity is excellent, a splitting tendency of the cyclic olefinic resin can be effectively suppressed, and as a result, a balance among the barrier properties, film forming properties, workability and sealing properties can be satisfactory.

In order to exhibit the barrier properties, it is effective to increase the thickness of the film; however, there are problems of costs and productivity, and further, the thick laminate causes a problem of deterioration of moldability at the time of secondary molding or molding in a bag shape. In addition, in particular, there are many cases where the packaging material for a food product immediately becomes waste without be reused, and use of the packaging material formed of a thick film is avoided from a viewpoint of protecting the environment. From these viewpoints, demand for reducing the film thickness of the packaging material is increased and taking a balance between the barrier properties and film thinning properties is the most importantly required matter in the market. Therefore, the total thickness of the multilayer film (I) in the present invention is in a range of 20 to 50 µm.

The thickness of the intermediate layer (B) of the multilayer film (I) to be used in the present invention is preferably from 0.5 to 10 µm from the above mentioned viewpoints . The multilayer film has effective barrier properties even if the resin layer is thinner than in the related art. For the use in which a thin film is highly required, even if the thickness of the resin layer is 5 µm or less, the effect of the present invention is not impaired.

The resin to be used for the intermediate layer (B) essentially contains 70% by mass or more of the cyclic olefinic resin (b1) as described above and preferably contains 90% by mass or more.

The cyclic olefinic resin (b1) is not particularly limited in its structure, as long as the glass transition temperature Tg is in a range of 70°C to 160°C, and examples thereof include a norbornene-based polymer, a vinyl alicyclic hydrocarbon polymer, and a cyclic conjugated diene polymer. Among these, the norbornene-based polymer is preferable. Also, examples of the norbornene-based polymer include a ring-opened polymer of a norbornene-based monomer (hereinafter, referred to as "COP") and a norbornene-based copolymer in which the norbornene-based monomer and olefin such as ethylene are copolymerized (hereinafter, referred to as "COC"). Further, a hydrogenated product of COP and COC is particularly preferable. Also, the weight average molecular weight of the cyclic olefinic resin is preferably from 5,000 to 500,000 and more preferably from 7,000 to 300,000. The glass transition temperature Tg of the cyclic olefinic resin can be easily adjusted depending on the type of the monomer to be used, the type and ratio of the other monomers to be used in a case of copolymerization, and the molecular weight thereof.

The norbornene-based monomer which is a raw material of the norbornene-based polymer is an alicyclic monomer having a norbornene ring. Examples of the norbornene-based monomer include norbornene, tetracyclododecene, ethylidene norbornene, vinyl norbornene, ethylidene tetracyclododecene, dicyclopentadiene, dimethanotetrahydrofluorene, phenyl norbornene, methoxycarbonyl norbornene, and methoxycarbonyl tetracyclododecene. These norbornene-based monomers may be used alone or two or more thereof may be used in combination.

The norbornene-based copolymer is a copolymer in which the norbornene-based monomer and copolymerizable olefin are copolymerized, and examples thereof include olefins having 2 to 20 carbon atoms such as ethylene, propylene, and 1-butene; cycloolefins such as cyclobutene, cyclopentene, and cyclohexene; and unconjugated dienes such as 1,4-hexadiene. The respective olefins may be used alone or two or more thereof may be used in combination.

In addition, the glass transition temperature Tg of the cyclic olefinic resin (b1) is essentially in a range of 70°C to 160°C, in order to exhibit sufficient barrier properties in the obtained intermediate layer (B) and from a viewpoint of capable of forming a necessarily sufficient thin film between the laminate layer (A) and the sealing layer (C), and particularly preferably 130°C or less from a viewpoint of capable of easily forming the target multilayer film (I). In addition, the glass transition temperature Tg or the melting point in the present invention is a value obtained by measuring according to DSC. In addition, a norbornene-based polymer in which the melt flow rate MFR (230°C, 21.18 N) of the cyclic olefinic resin (b1) is from 0.2 to 17 g/10 minutes is preferable, in order to easily form the target multilayer film (I) and obtain the excellent balance of the barrier properties.

As a commercially available product which can be used as the cyclic olefinic resin (b1), examples of the ring-opened polymer (COP) of the norbornene-based monomer include "(ZEONOR)" manufactured by ZEON Corporation, and examples of the norbornene-based copolymer (COC) include "APEL" manufactured by Mitsui Chemicals, Inc. and "TOPAS" manufactured by Polyplastics Co., Ltd.

70% by mass or more of the cyclic olefinic resin (b1) is essentially contained in the intermediate layer (B) as a resin component, and examples of the resin which can be used in combination with the resin include olefinic resins not having a cyclic structure.

Examples of the olefinic resin include an ethylene-based resin and a propylene-based resin, and any resin mentioned as the resin which can be used in the laminate layer (A) can be exemplified.

The sealing layer (C) of the multilayer film (I) to be used in the present invention includes an olefinic resin (c1) not having a cyclic structure as a main component. The same resin as the olefinic resin (a1) to be used in the laminate layer (A) can be exemplified as the olefinic resin (c1) which can be used here, and the preferable resin is the same as well. The olefinic resin (a1) to be used in the laminate layer (A) and the olefinic resin (c1) to be used in the sealing layer (C) may be the same as or different from each other, or two or more of the olefinic resins may be mixed.

In the multilayer film (I) of present invention, the thickness of the sealing layer (C) is essentially 3 µm or more and preferably 15 µm or less, from a viewpoint of exhibiting an appropriate sealing strength when the laminate is used as a packaging material.

In the laminate layer (A), the intermediate layer (B), and the sealing layer (C) of the multilayer film (I) to be used in the present invention, components such as an antifogging agent, an antistatic agent, a heat stabilizer, a nucleating agent, an antioxidant, a lubricant, an anti-blocking agent, a mold releasing agent, an ultraviolet absorber, and a coloring agent can be added in a range not impairing the effect of the present invention. In particular, the frictional coefficient of the surface of the multilayer film (I) is preferably 1.5 or less, particularly preferably 1.0 or less in order to impart working properties at the time of molding a film and packaging properties of a filling machine. From the viewpoints, it is preferable to appropriately add a lubricant, an anti-blocking agent, or an antistatic agent in the resin layer which corresponds to the surface layer of the multilayer film. Also, a single substrate layer or a plurality of substrate layers (D) including an olefinic resin as a main component may be further included between the laminate layer (A) and the intermediate layer (B). In particular, it is possible to have a configuration of (A)/(D)/(C)/(B) from a viewpoint of preventing a curl of the multilayer film or easily adjusting the thickness of the intermediate layer (B).

In addition, in the multilayer film (I) to be used in the present invention, it is preferable that the surface of the resin layer in the surface layer (single surface and/or both surfaces) is treated such that the surface tension of the surface is from 35 to 45 mN/m. Examples of the treatment method include a surface oxidization treatment such as a corona treatment, a plasma treatment, a chromic acid treatment, a flame treatment, a hot air treatment, and an ozone·ultraviolet ray treatment; and a surface roughness treatment such as a sandblast, and the corona treatment is preferable. By conducting the surface treatment, in a case where a post treatment such as printing on the multilayer film (I) and coating of an adhesive is conducted, coating properties of an ink or adhesive become satisfactory and adhesion between the film and the ink or adhesive becomes excellent, thereby easily avoiding problems such as exfoliation and delamination.

The method for manufacturing the multilayer film (I) to be used in the present invention is not particularly limited, and a co-extrusion method is exemplified, in which a resin or a mixed resin being used for each layer of the multilayer film (I) is, each separately, heated and melted by an extruder, the respective resins are laminated in a melted state by a co-extrusion multilayer dice method or a feed block method, and the resulting laminate is molded in a film shape by an inflation or T die·chill roll method. The co-extrusion method is preferable because the ratio of the thickness of each layer can be adjusted relatively freely and the film having excellent hygiene and cost performance can be obtained. In addition, in a case where the ethylene-based resin is used for the laminate layer (A) and the sealing layer (C) to be used in the present invention, since a difference between the melting point and Tg of the cyclic olefin resin to be used in the intermediate layer is significant, the film appearance may be deteriorated at the time of co-extrusion processing or it may be difficult to form a uniform layer structure. In order to suppress the deterioration, the T die·chill roll method in which melting and extrusion can be performed at a relatively high temperature is preferable.

As a method for manufacturing the multilayer film (I), in a case of using a multilayer air cooling inflation method, an apparatus generally used in the market may be used. A general air cooling inflation apparatus is configured to include an extruder, a cyclic die, a cooling ring, a blower, a guide plate, a pinch roll, a corona treatment apparatus, a winding apparatus, and the like. In a case of a multilayer, a plurality of extruders and a spiral multilayer die are equipped therein. The manufacturing condition by the multilayer inflation method is not particularly limited as long as the manufacturing condition does not impair the features of the present invention, and it is preferable to use the resin having such properties that bubble stability can be maintained when the resin is extruded from the cyclic die. In a case where the olefinic resins (a1) and (c1) not having a cyclic structure are ethylene-based resins, the ethylene-based resin having the aforementioned density range and composition can be used, but the MFR (190°C, 21.18 N) is preferably from 0.1 to 5 g/10 minutes and more preferably from 0.5 to 4 g/10 minutes from a viewpoint of bubble stability. In a case of the propylene-based resin, in the same manner, the MFR (230°C, 21.18 N) is preferably from 0.1 to 5 g/10 minutes and more preferably from 0.5 to 4 g/10 minutes. If the MRF of the olefinic resin not having a cyclic structure is in this range, even if the resin having the aforementioned properties is used as it is as the cyclic olefinic resin (b1), the bubble stability and extrusion moldability are improved.

In addition, after a multilayer configuration having a 3-layered configuration is prepareed using the co-extrusion lamination method, in a case where a high heat sealing strength, hot tack properties or a high packaging speed is required, further, a special heat sealing resin may be coated, a film having a special heat sealing resin may be laminated, or a film having a special heat sealing resin may be extrusion-laminated on the surface of the side opposite to the side of the multilayer to be attached to the substrate to thereby form a heat sealing layer.

The obtained multilayer film (I) is used to be attached to the other film, namely, a substrate film (II). The substrate film (II) which can be used at this time are not particularly limited, and a plastic substrate, in particular, a biaxially stretched resin film is preferably used from a viewpoint of easily exhibiting the effect of the present invention. Also, in a case of the purpose in which transparency is not necessary, an aluminum foil can be used alone or in combination with the film.

Examples of the stretched resin film include a biaxially stretched polyester (PET), biaxially stretched polypropylene (OPP), biaxially stretched polyamide (PA), co-extruded biaxially stretched polypropylene having an ethylene vinyl alcohol copolymer (EVOH) as a central layer, a biaxially stretched ethylene vinyl alcohol copolymer (EVOH), and a co-extruded biaxially stretched polypropylene coated with polyvinylidene chloride (PVDC). These may be used alone or a plurality thereof may be used.

The laminate of the present invention is a film formed by laminating the substrate film (II) on the multilayer film (I) obtained by the aforementioned manufacturing method. As the lamination method, for example, lamination is performed via an adhesive layer composed of an adhesive according to a dry lamination, a wet lamination, a non-solvent lamination, an extrusion lamination, or the like.

Examples of the adhesive to be used in the dry lamination include a polyether-polyurethane-based adhesive and a polyester-polyurethane-based adhesive. In addition, various adhesives can be used and a pressure sensitive adhesive is preferably used. Examples of the pressure sensitive adhesive include a rubber-based adhesive in which a polyisobutylene rubber, a butyl rubber, or a mixture thereof is dissolved in an organic solvent such as benzene, toluene, xylene, and hexane; an adhesive in which a tackifier such as an abietic acid rosin ester, a terpene·phenol copolymer and a terpene·indene copolymer is blended in the rubber-based adhesive; and an acrylic adhesive in which an acrylic copolymer having a glass transition temperature of -20°C or less such as 2-ethylhexyl acrylate·acrylic acid n-butyl copolymer and a 2-ethylhexyl acrylate·ethyl acrylate·methyl methacrylate copolymer is dissolved in an organic solvent.

The adhesive for a laminate is generally cured by polyol/isocyanate and frequently used for high performance purposes such as a retort purpose. In addition, in the related art, in general, the aluminum foil and the multilayer film are combined to be attached. However, various transparent vapor deposited film is commercially available, which has both the barrier properties and transparency due to the introduction of the transparent vapor deposition technology. In addition, the transparent vapor deposited film and the multilayer film are frequently attached because of the demand for improving visibility of the contents.

Therefore, in order to impart adhesion between the multilayer film and the vapor deposited film, a silane coupling agent such as epoxysilane and aminosilanesilane is generally added to the adhesive.

However, if the amount of epoxysilane is increased in order to maintain adhesion, elution of epoxysilane to a food product is increased. Further, if the same adhesive is used for a laminate of the non-vapor deposited film, the elution amount of the silane coupling agent is greater than that of the case of a configuration having the vapor deposited film, and it is necessary to exchange the adhesive depending on the configuration.

Examples of the polyol to be used in the adhesive for a laminate include polyols itself described below; polyester polyols obtained by reacting polyol and polycarboxylic acids described below; and polyethers obtained by addition polymerizing monomers such as ethylene oxide, propylene oxide, butylene oxide, styrene oxide, epichlorohydrin, tetrahydrofuran, and cyclohexylene using a compound having 2 active hydrogen atoms such as ethylene glycol, diethylene glycol, triethylene glycol, propylene glycol, trimethylene glycol, 1,3-butanediol, 1,4-butanediol, 1,6-hexanediol, and neopentyl glycol as an initiator.

Examples of the polyol include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, triethylene glycol, polycaprolactone diol, dimer diol, bisphenol A, and hydrogenated bisphenol A; polyesters obtained by a ring-opening polymerization reaction of a cyclic ester compound such as propiolactone, butyrolactone, ε-caprolactone, δ-valerolactone, and β-methyl-δ-valerolactone; and polyethers obtained by addition polymerizing monomers such as ethylene oxide, propylene oxide, butylene oxide, styrene oxide, epichlorohydrin, tetrahydrofuran, and cyclohexylene using a compound having 2 active hydrogen atoms such as ethylene glycol, diethylene glycol, triethylene glycol, propylene glycol, trimethylene glycol, 1,3-butanediol, 1,4-butanediol, 1,6-hexanediol, and neopentyl glycol as an initiator.

Examples of the polycarboxylic acids include polybasic acids including succinic acid, adipic acid, azelaic acid, sebacic acid, dodecane dicarboxylic acid, maleic anhydride, fumaric acid, 1,3-cyclopentane dicarboxylic acid, 1,4-cyclohexane dicarboxylic acid, terephthalic acid, isophthalic acid, phthalic acid, 1,4-naphthalene dicarboxylic acid, 2,5-naphthalene dicarboxylic acid, 2,6-naphthalene dicarboxylic acid, naphthalic acid, biphenyl dicarboxylic acid, 1,2-bis(phenoxy)ethane-p,p'-dicarboxylic acid, and anhydrides or ester-forming derivatives of these dicarboxylic acids; p-hydroxybenzoic acid, p-(2-hydroxyethoxy)benzoic acid, ester-forming derivatives of these hydorxycarboxylic acids, and dimer acid.

Examples of the polyisocyanate include organic compound having at least two isocyanate groups within a molecule. Examples of the organic polyisocyanate include polyisocyanates such as tolylene diisocyanate, xylene diisocyanate, diphenylmethane diisocyanate, 1,6-hexamethylene diisocyanate, isophorone diisocyanate, 4,4'-methylenebis(cyclohexyl isocyanate), lysine diisocyanate, trimethyl hexamethylene diisocyanate, 1,3-(isocyanate methyl)cyclohexane, 1,5-naphthalene diisocyanate, and triphenylmethane triisocyanate; and derivatives (modified products) of polyisocyanates such as an adduct form of these polyisocyanates, a burette form of these polyisocyanates, and an isocyanurate form of these polyisocyanates.

In addition, an adhesive may be used, in which the isocyanate and the polyol are reacted with each other in a mixing ratio of excessive isocyanate groups.

In the adhesive, a polyol/isocyanate equivalent ratio of the hydroxyl group equivalent of the polyol to the isocyanate equivalent of the polyisocyanate is preferably from 0.5 to 5.0.

Examples of the epoxysilane include methacryl silane-based silane coupling agent such as 3-methacryloxypropyl trimethoxysilane and 3-methacryloxypropyl triethoxysilane; 3-glycidoxypropyl trimethoxysilane, 3-glycidoxypropyl triethoxysilane, and 2-(3,4-epoxycyclohexyl)ethyl trimethoxysilane.

### <Regarding regulations of Europe>

The Switzerland legalizes the elution regulation relating to an ink or coating agent that does not come into contact with a food product as Swiss Ordinance SR817.023.21, and is the only country having a positive list (PL) of the material that does not come into contact with the food product in the world. The PL is classified by whether toxic data of a substance is already known or unknown, and each Specific Migration Limit (SML) is provided.

Toxic data of the epoxysilane is unknown and SML is less than 10 µg/kg-food.

The laminate of the present invention can be preferably used as various packaging materials. Examples of the packaging material include food products, chemical products, cosmetics, sanitary goods, industrial parts, sundries, packaging bags used for magazines, containers, and a lid for containers. In particular, the laminate can be preferably used for the food products or medical products from a viewpoint of effectively suppressing elution from the adhesive layer to the contents and preventing pollution of the contents.

As the packaging materials, a packaging bag whose inner surface (the surface on the side opposite to the substrate side of the laminate of the present invention) is formed to be inside is preferable, by overlapping the laminates of the present invention such that the inner surface of one laminate and the inner surface of another laminate face each other, and then heat sealing, or overlapping the inner surface of the laminate and the substrate of another laminate such that the inner surface of one laminate faces the substrate of another laminate, and then heat sealing. For example, after two pieces of the laminates are cut into a size of the desired packaging bag and the laminates are overlapped to each other to perform heat sealing three sides so as to have the shape of a bag, the bag is filled with the contents from the one side that has not been heat sealed and then the one side is heat sealed so that the bag can be used as a packaging bag. Further, after the end portion of a roll-shaped film is sealed to have a cylinder (pillow) shape by an automatic packaging apparatus, a packaging bag can be formed by sealing the top and bottom.

In addition, by performing heat sealing the inner surface layer and a separate film, a sheet or a container, which can be heat sealed with the inner surface layer, a packaging bag, a container and a lid of the container can be formed. At that time, as the separate film to be used, a film or a sheet each having a relatively weak mechanical strength such as LDPE, EVA, and polypropylene can be used.

With respect to the packaging material using the laminate of the present invention, a tearing start portion such as a V notch, an I notch, a perforation, and a fine pore may be optionally formed at a sealed portion of the packaging material, in order to weaken the initial tearing strength and improve opening properties.

### Examples

Next, the present invention will be described in detail using Examples and Comparative Examples.

### <Adhesive>

### Preparation Example 1 [Preparation Example of main agent]

10.0 parts of ethylene glycol, 21.1 parts of neopentyl glycol, 10.0 parts of 1,6-hexanediol, 8.0 parts of Tsunodime 216, 21.5 parts of isophthalic acid, 21.5 parts of terephthalic acid, 23.4 parts of adipic acid and 0.006 parts of titanium catalyst were put into a polyester reactor vessel equipped with a stirrer, a thermometer, a nitrogen gas introducing tube, a rectifying tube, and a moisture separator, the reactor vessel was gradually heated such that the temperature of the upper part of the rectifying tube does not exceed 100°C, and the temperature thereof was maintained to 240°C. The reaction was further continued until the acid value became 2 mgKOH/g or less. The temperature was reduced to 10 mmHg or less and maintained for 1.5 hours to finish the esterification reaction, thereby obtaining an intermediate polyester polyol having a hydroxyl value of 28. 8.9 parts of isophorone diisocyanate was added with respect to 100 parts of the obtained intermediate polyester polyol and heated at a temperature of 120°C to perform urethanization reaction until the NCO% became 3.1, thereby obtaining a polyester urethane polyisocyanate. After the polyester urethane polyisocyanate was diluted with 111.9 parts of ethyl acetate, the temperature was decreased to 40°C and maintained at 50°C for about 1 hour, thereby obtaining a polyurethane polyester polyol resin solution U having a non-volatile component of 60%.

### Preparation Example 2 [Additive]

3-glycidoxypropyl trimethoxysilane (KBM-403 manufactured by Shin-Etsu Chemical Co., Ltd.) was used as epoxysilane, 3-aminopropyl trimethoxysilane (KBM-903 manufactured by Shin-Etsu Chemical Co., Ltd.) was used as aminosilane, 85% phosphoric acid (manufactured by Wako Pure Chemical Industries, Ltd.) was used as phosphoric acid, and a reagent having a Mw of 7,500 (manufactured by Wako Pure Chemical Industries, Ltd.) was used a styrene-maleic anhydride copolymer (SMA).

### Example 1

An ethylene-α-olefin copolymer (LLDPE1) having a density of 0.938 g/cm³ and an MFR of 3.8 g/10 minutes (190°C, 21.18 N) was used as a resin for a laminate layer (A). A ring-opened polymer of a norbornene-based monomer (COC1) having a glass transition temperature (Tg) of 78°C was used as a resin for an intermediate layer (B). Further, an ethylene-α-olefin copolymer (LLDPE2) having a density of 0.918 g/cm³ and an MFR of 3.5 g/10 minutes (190°C, 21.18 N) was used as a resin for a sealing layer (C).

These resins were respectively supplied to an extruder for a layer (A) (cylinder diameter: 50 mm), an extruder for a layer (B) (cylinder diameter: 50 mm), and an extruder for a layer (C) (cylinder diameter: 50 mm) to melt the resins at a temperature of 200°C to 250°C, the melted resins were respectively supplied to a co-extrusion multilayer film-manufacturing apparatus (temperature of feed block and T die: 250°C) having a feed block according to the T die·chill roll method to perform co-melting extrusion, thereby obtaining a multilayer film whose layer configuration is a 3-layered configuration having a layer (A)/layer (B)/ layer (C)having a thickness of 20/2/8 µm, respectively (total thickness of 30 µm).

The polyurethane polyester polyol resin solution U, aromatic polyisocyanate (KW-75 manufactured by DIC Corporation), and a silane compound were blended according to composition shown in Table 1 to prepare an adhesive mixture having a solid content of 30%. The obtained adhesive mixture was coated on the surface of the laminate layer (A) of the obtained film such that the coating amount became 2.2 g/m², an aluminum foil having the thickness of 12 µm and the multilayer film were attached to each other to form a laminate, and the elution test was performed. Also, in the same manner, a biaxially stretched polyester film having the thickness of 12 µm and the multilayer film were attached to each other, and the sealing strength was measured.

### Example 2

An ethylene-α-olefin copolymer (LLDPE3) having a density of 0.947 g/cm³ and an MFR of 5.5 g/10 minutes (190°C, 21.18 N) was used as a resin for a layer (A), a ring-opened polymer (COC2) of a norbornene-based monomer having a glass transition temperature (Tg) of 160°C was used as a resin for a layer (B), and an ethylene-α-olefin copolymer (LLDPE4) having a density of 0.915 g/cm³ and an MFR of 3.5 g/10 minutes (190°C, 21.18 N) was used as a resin for a layer (C), and, except for the above, the same as in Example 1 was performed, thereby obtaining a multilayer film of 23.8/1.2/5 µm. (total thickness of 30 µm). In the same manner as in Example 1, a laminate was obtained using the multilayer film.

### Example 3

A propylene homopolymer (HOPP1) having a melting point of 164°C and an MFR of 8 g/10 minutes (230°C, 21.18 N) was used as a resin for a layer (A), a ring-opened polymer (COC1) of a norbornene-based monomer having a glass transition temperature (Tg) of 78°C was used as a resin for a layer (B), and a propylene-ethylene copolymer (COPP1) having a melting point of 127°C and an MFR of 7 g/10 minutes (230°C, 21.18 N) was used as a resin for a layer (C), and, except for the above, the same as in Example was performed, thereby obtaining a multilayer film of 19/2/9 µm (total thickness: 30 µm), and a laminate was prepared using the multilayer film.

### Example 4

A propylene homopolymer (HOPP1) having a melting point of 164°C and an MFR of 8 g/10 minutes (230°C, 21.18 N) was used as a resin for a layer (A), a ring-opened polymer (COC1) of a norbornene-based monomer having a glass transition temperature (Tg) of 78°C was used as a resin for a layer (B), and a propylene-ethylene copolymer (COPP1) having a melting point of 127°C and an MFR of 7 g/10 minutes (230°C, 21.18 N) was used as a resin for a layer (C), and, except for the above, the same as in Example 1 was performed, thereby obtaining a multilayer film of 23.8/1.2/5 µm (total thickness: 30 µm), and a laminate was prepared using the multilayer film.

### Example 5

An ethylene-α-olefin copolymer (LLDPE3) having a density of 0.947 g/cm³ and an MFR of 5.5 g/10 minutes (190°C, 21.18 N) was used as a resin for a laminate layer (A). An ethylene-α-olefin copolymer (LLDPE1) having a density of 0.938 g/cm³ and an MFR of 3.8 g/10 minutes (190°C, 21.18 N) was used as a resin for a substrate layer (D). A ring-opened polymer (COC3) of a norbornene-based monomer having a glass transition temperature (Tg) of 135°C was used as a resin for an intermediate layer (B). Further, an ethylene-α-olefin copolymer (LLDPE2) having a density of 0.918 g/cm³ and an MFR of 3.5 g/10 minutes (190°C, 21.18 N) was used as a resin for a sealing layer (C) .

These resins were respectively supplied to an extruder for a layer (A) (cylinder diameter: 50 mm), an extruder for a layer (D) (cylinder diameter: 50 mm), an extruder for a layer (B) (cylinder diameter: 40 mm), and an extruder for a layer (C) (cylinder diameter: 50 mm) to melt the resins at a temperature of 200°C to 250°C, the melted resins were respectively supplied to a co-extrusion multilayer film-manufacturing apparatus (temperature of feed block and T die: 250°C) having a feed block according to the T die·chill roll method to perform co-melting extrusion, thereby obtaining a multilayer film whose layer configuration is a 4-layered configuration having a layer (A)/layer (D)/layer (B)/ layer (C) having a thickness of 5.3/15/0.7/9 µm, respectively (total thickness: 30 µm). In the same manner as in Example 1, a laminate was obtained using the multilayer film.

### Example 6

An ethylene-α-olefin copolymer (LLDPE4) having a density of 0.915 g/cm³ and an MFR of 3.5 g/10 minutes (190°C, 21.18 N) was used as a resin for a layer (A), a resin, in which 70% by mass of a ring-opened polymer (COC1) of a norbornene-based monomer having a glass transition temperature (Tg) of 78°C and 30% by mass of ethylene-α-olefin copolymer (LLDPE4) having a density of 0.915 g/cm³ and an MFR of 3.5 g/10 minutes (190°C, 21.18 N) were blended, was used as a resin for a layer (B), and an ethylene-α-olefin copolymer (LLDPE5) having a density of 0.900 g/cm³ and an MFR of 4.0 g/10 minutes (190°C, 21.18 N) was used as a resin for a layer (C), and, except for the above, the same as in Example 1 was performed, thereby obtaining a multilayer film of 24/3/3 µm (total thickness of 30 µm). In the same manner as in Example 1, a laminate was obtained using the multilayer film.

### Example 7

A propylene homopolymer (HOPP1) having a melting point of 164°C and an MFR of 8 g/10 minutes (230°C, 21.18 N) was used as a resin for a layer (A), a resin, in which 70% by mass of a ring-opened polymer (COC1) of a norbornene-based monomer having a glass transition temperature (Tg) of 78°C and 30% by mass of a propylene-ethylene copolymer (COPP2) having a melting point of 140°C and an MFR of 7 g/10 minutes (230°C, 21.18 N) were blended, was used as a resin for a layer (B), and a propylene-ethylene copolymer (COPP1) having a melting point of 127°C and an MFR of 7 g/10 minutes (230°C, 21.18 N) was used as a resin for a layer (C), and, except for the above, the same as in Example was performed, thereby obtaining a multilayer film of 18/3/9 µm (total thickness of 30 µm), and a laminate was prepared using the multilayer film.

### Example 8

An ethylene-α-olefin copolymer (LLDPE3) having a density of 0.947 g/cm³ and an MFR of 5.5 g/10 minutes (190°C, 21.18 N) was used as a resin for a layer (A), a resin, in which 70% by mass of a ring-opened polymer (COC2) of a norbornene-based monomer having a glass transition temperature (Tg) of 160°C and 30% by mass of ethylene-α-olefin copolymer (LLDPE2) having a density of 0.918 g/cm³ and an MFR of 3.5 g/10 minutes (190°C, 21.18 N) were blended, was used as a resin for a layer (B), and an ethylene-α-olefin copolymer (LLDPE2) having a density of 0.918 g/cm³ and an MFR of 3.5 g/10 minutes (190°C, 21.18 N) was used as a resin for a layer (C), and, except for the above, the same as in Example 1 was performed, thereby obtaining a multilayer film of 24/3/3 µm (total thickness of 30 µm). In the same manner as in Example 1, a laminate was obtained using the multilayer film.

### Example 9

A resin obtained by mixing 90% by mass of ethylene-α-olefin copolymer (LLDPE1) having a density of 0.938 g/cm³ and an MFR of 3.8 g/10 minutes (190°C, 21.18 N) with 10% by mass of low density polyethylene (LDPE) having a density of 0.920 g/cm³ and an MFR of 0.5 g/10 minutes (190°C, 21.18 N) was used as a resin for a laminate layer (A). A resin obtained by mixing 90% by mass of ethylene-α-olefin copolymer (LLDPE1) having a density of 0.938 g/cm³ and an MFR of 3.8 g/10 minutes (190°C, 21.18 N) with 10% by mass of low density polyethylene (LDPE) having a density of 0.920 g/cm³ and an MFR of 0.5 g/10 minutes (190°C, 21.18 N) was used as a resin for a substrate layer (D1). A resin obtained by mixing 90% by mass of ethylene-α-olefin copolymer (LLDPE1) having a density of 0.938 g/cm³ and an MFR of 3.8 g/10 minutes (190°C, 21.18 N) with 10% by mass of low density polyethylene (LDPE) having a density of 0.920 g/cm³ and an MFR of 0.5 g/10 minutes (190°C, 21.18 N) was used as a resin for a substrate layer (D2). A ring-opened polymer (COC1) of a norbornene-based monomer having a glass transition temperature (Tg) of 78°C was used as a resin for an intermediate layer (B). Further, a resin obtained by mixing 90% by mass of ethylene-α-olefin copolymer (LLDPE2) having a density of 0.918 g/cm³ and an MFR of 3.5 g/10 minutes (190°C, 21.18 N) with 10% by mass of low density polyethylene (LDPE) having a density of 0.920 g/cm³ and an MFR of 0.5 g/10 minutes (190°C, 21.18 N) was used as a resin for a sealing layer (C) .

These resins were respectively supplied to an extruder for a layer (A) (cylinder diameter: 50 mm), an extruder for a layer (D1) (cylinder diameter: 40 mm), an extruder for a layer (D2) (cylinder diameter: 40 mm), an extruder for a layer (B) (cylinder diameter: 40 mm), and an extruder for a layer (C) (cylinder diameter: 50 mm) to melt the resins at a temperature of 180°C to 210°C, the melted resins were respectively supplied to a co-extrusion multilayer film-manufacturing apparatus equipped with a spiral 5-layered die with a diameter of 200 mm and a lip of 3 mm by the air cooling inflation method to perform co-melting extrusion, thereby obtaining a multilayer film whose layer configuration is a 5-layered configuration having a layer (A)/layer (D1)/layer (D2)/layer (B)/layer (C) having a thickness of 9/3/6/3/9 µm, respectively (total thickness of 30 µm). In the same manner as in Example 1, a laminate was obtained using the multilayer film.

### Example 10

A propylene-ethylene copolymer (COPP3) having a melting point of 140°C and an MFR of 3.5 g/10 minutes (230°C, 21.18 N) was used as a resin for a laminate layer (A). A resin obtained by mixing 95% by mass of ethylene-α-olefin copolymer (LLDPE5) having a density of 0.933 g/cm³ and an MFR of 3.5 g/10 minutes (190°C, 21.18 N) with 5% by mass of low density polyethylene (LDPE) having a density of 0.920 g/cm³ and an MFR of 0.5 g/10 minutes (190°C, 21.18 N) was used as a resin for a substrate layer (D1). A resin obtained by mixing 95% by mass of ethylene-α-olefin copolymer (LLDPE5) having a density of 0.933 g/cm³ and an MFR of 3.5 g/10 minutes (190°C, 21.18 N) with 5% by mass of low density polyethylene (LDPE) having a density of 0.920 g/cm³ and an MFR of 0.5 g/10 minutes (190°C, 21.18 N) was used as a resin for a substrate layer (D2). A ring-opened polymer (COC1) of a norbornene-based monomer having a glass transition temperature (Tg) of 78°C was used as a resin for an intermediate layer (B). Further, a resin obtained by mixing 90% by mass of ethylene-α-olefin copolymer (LLDPE2) having a density of 0.918 g/cm³ and an MFR of 3.5 g/10 minutes (190°C, 21.18 N) with 10% by mass of low density polyethylene (LDPE) having a density of 0.920 g/cm³ and an MFR of 0.5 g/10 minutes (190°C, 21.18 N) was used as a resin for a sealing layer (C) .

These resins were respectively supplied to an extruder for a layer (A) (cylinder diameter: 50 mm), an extruder for a layer (D1) (cylinder diameter: 40 mm), an extruder for a layer (D2) (cylinder diameter: 40 mm), an extruder for a layer (B) (cylinder diameter: 40 mm), and an extruder for a layer (C) (cylinder diameter: 50 mm) to melt the resins at a temperature of 180°C to 210°C, the melted resins were respectively supplied to a co-extrusion multilayer film-manufacturing apparatus equipped with a spiral 5-layered die with a diameter of 200 mm and a lip of 3 mm by the air cooling inflation method to perform co-melting extrusion, thereby obtaining a multilayer film whose layer configuration is a 5-layered configuration having a layer (A)/layer (D1)/layer (D2)/layer (B)/layer (C) having a thickness of 11/2/6/1/10 µm, respectively (total thickness of 30 µm). In the same manner as in Example 1, a laminate was obtained using the multilayer film.

### Example 11

A propylene homopolymer (HOPP2) having a melting point of 160°C and an MFR of 2.5 g/10 minutes (230°C, 21.18 N) was used as a resin for a laminate layer (A). A propylene-ethylene copolymer (COPP3) having a melting point of 140°C and an MFR of 3.5 g/10 minutes (230°C, 21.18 N) was used as a resin for a substrate layer (D1). A propylene-ethylene copolymer (COPP2) having a melting point of 140°C and an MFR of 3.5 g/10 minutes (230°C, 21.18 N) was used as a resin for a substrate layer (D2). A resin obtained by mixing 80% by mass of a ring-opened polymer (COC1) of a norbornene-based monomer having a glass transition temperature (Tg) of 78°C with 20% by mass of a propylene-ethylene copolymer (COPP2) having a melting point of 140°C and an MFR of 3.5 g/10 minutes (230°C, 21.18 N) was used as a resin for an intermediate layer (B). Further, a propylene-ethylene copolymer (COPP3) having a melting point of 140°C and an MFR of 3.5 g/10 minutes (230°C, 21.18 N) was used as a resin for a sealing layer (C).

These resins were respectively supplied to an extruder for a layer (A) (cylinder diameter: 50 mm), an extruder for a layer (D1) (cylinder diameter: 40 mm), an extruder for a layer (D2) (cylinder diameter: 40 mm), an extruder for a layer (B) (cylinder diameter: 40 mm), and an extruder for a layer (C) (cylinder diameter: 50 mm) to melt the resins at a temperature of 180°C to 210°C, the melted resins were respectively supplied to a co-extrusion multilayer film-manufacturing apparatus equipped with a spiral 5-layered die with a diameter of 200 mm and a lip of 3 mm by the air cooling inflation method to perform co-melting extrusion, thereby obtaining a multilayer film whose layer configuration is a 5-layered configuration having a layer (A)/layer (D1)/layer (D2)/layer (B)/layer (C) having a thickness of 9/3/6/3/9 µm, respectively (total thickness of 30 µm). In the same manner as in Example 1, a laminate was obtained using the multilayer film.

### Comparative Example 1

The same was performed as in Example 1 except for using a monolayer film with a thickness of 30 µm of an ethylene-α-olefin copolymer (LLDPE1) having a density of 0.938 g/cm³ and an MFR of 3.8 g/10 minutes (190°C, 21.18 N), thereby obtaining a laminate.

### Comparative Example 2

A propylene homopolymer (HOPP) having a melting point of 164°C and an MFR of 8 g/10 minutes (230°C, 21.18 N) was used as a laminate layer and a sealing layer, and a propylene-ethylene copolymer (COPP) having a melting point of 127°C and an MFR of 7 g/10 minutes (230°C, 21.18 N) was used as an intermediate layer (B). Except for the above, the same as in Example 1 was performed to prepare a multilayer film having a thickness of 15/10/5 µm (total thickness of 30 µm) and a laminate was prepared using the multilayer film.

### Comparative Example 3

A propylene homopolymer (HOPP) having a melting point of 164°C and an MFR of 8 g/10 minutes (230°C, 21.18 N) was used as a resin for a laminate layer, a ring-opened polymer of a norbornene-based monomer (COC1) having a glass transition temperature (Tg) of 78°C was used as a resin for an intermediate layer, and a propylene-ethylene copolymer (COPP) having a melting point of 127°C and an MFR of 7 g/10 minutes (230°C, 21.18 N) was used as a resin for a sealing layer and, except for the above, the same as in Example 1 was performed to prepare a multilayer film having a thickness of 8/20/2 µm (total thickness of 30 µm) and a laminate using the multilayer film.

### Comparative Example 4

A propylene homopolymer (HOPP) having a melting point of 164°C and an MFR of 8 g/10 minutes (230°C, 21.18 N) was used as a resin for a laminate layer, a ring-opened polymer of a norbornene-based monomer (COC1) having a glass transition temperature (Tg) of 78°C was used as a resin for an intermediate layer, and a propylene-ethylene copolymer (COPP) having a melting point of 127°C and an MFR of 7 g/10 minutes (230°C, 21.18 N) was used as a resin for a sealing layer. The same as in Example 1 was performed to prepare a multilayer film having a thickness of 26/2/2 µm (total thickness of 30 µm) and a laminate using the multilayer film.

### Test method

### (1)Suppression of elution of adhesive component (epoxysilane) <based on EN13130>

- An aluminum foil #12 and a sealant film were laminated by the specific adhesive containing epoxysilane. The coating amount of the adhesive was 2.2 g/m² and aging was performed at 40°C x 24 hours.
- A pouch was prepared such that an area which came into contact with the contents became 200 cm², and the pouch was filled with 100 ml of 95% ethanol as a pseudo food product solvent and sealed.
- After the prepared pouch was stored at a temperature of 60°C for 5 days, 100 ml of 95% ethanol content was concentrated to 5 ml and a silane compound was quantified by gas chromatography mass spectrometry (GC-MS).
   GC-MS: GC2100A manufactured by Shimadzu Corporation
   Column: polydimethyl siloxane-based

### (2) Sealing strength

The multilayer film and PET #12 (E5102 manufactured by TOYOBO CO., LTD.) were dry laminated using the specific adhesive containing epoxysilane in the same manner as the above. The obtained laminate film was heat sealed by a heat sealer at a temperature of 100°C to 180°C depending on a film composition and a pressure of 0.2 MPa for 1 second, and a peak strength was evaluated when the film was subjected to 90° peeling.

The results evaluated as the above are summarized in the following.

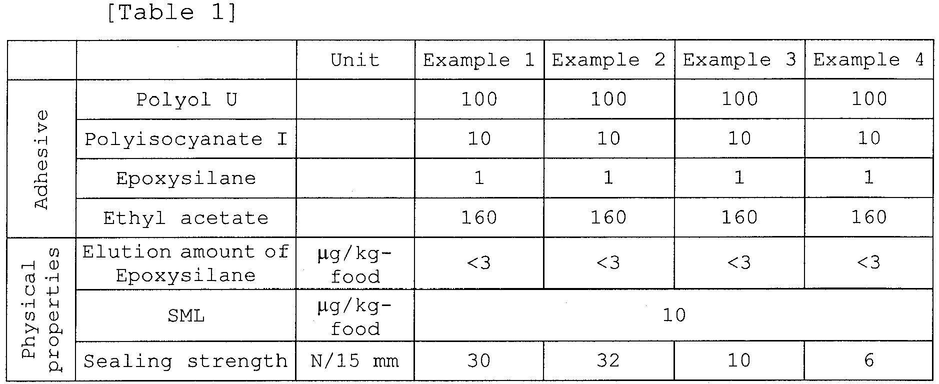

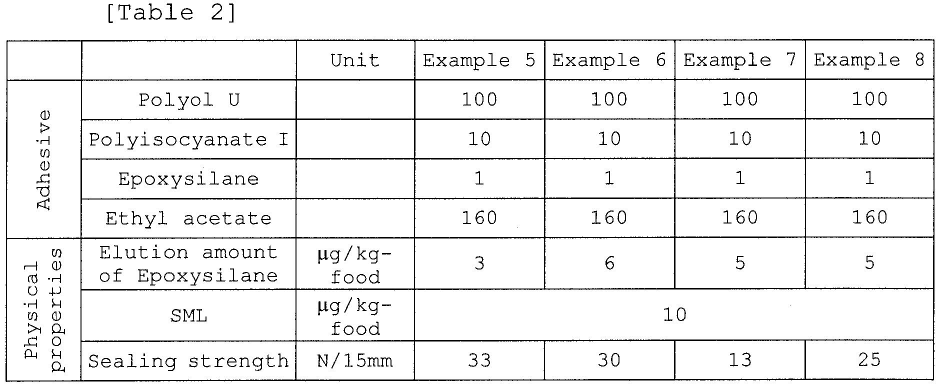

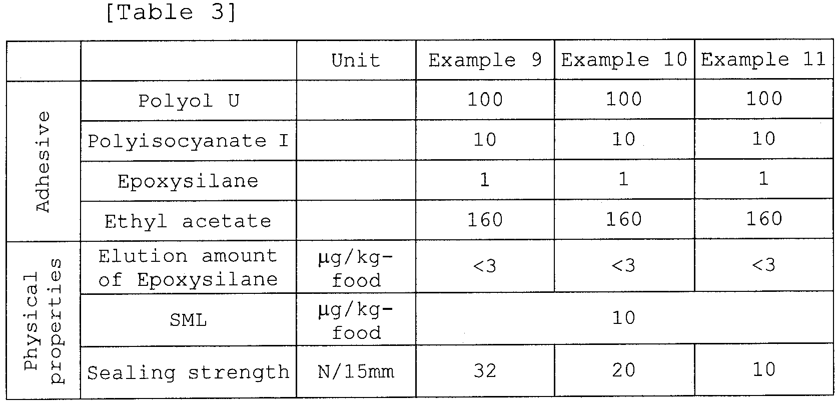

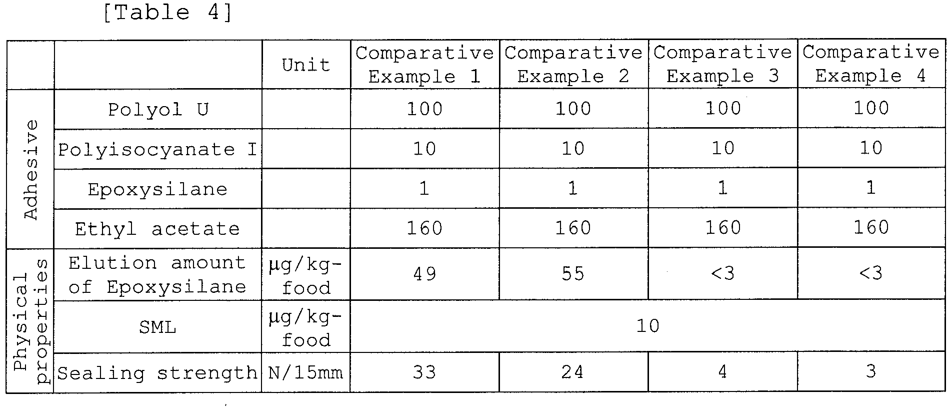

## Claims

1. A barrier laminate that is formed by laminating the surface of a laminate layer (A) side of a multilayer film (I) with a substrate film (II) using an adhesive, in which the multilayer film (I) is formed by laminating the laminate layer (A) which includes an olefinic resin (a1) not having a cyclic structure as a main component, an intermediate layer (B) which includes 70% by mass or more of a cyclic olefinic resin (b1) having a glass transition temperature Tg of 70°C to 160°C as a resin component, and a sealing layer (C) which includes an olefinic resin (c1) not having a cyclic structure as a main component in the order of (A)/(B)/(C); and the total thickness of the multilayer film (I) is from 20 to 50 µm, the thickness ratio of the intermediate layer (B) is from 0.5% to 10%, and the thickness of the sealing layer (C) is 3 µm or more.

2. The barrier laminate according to Claim 1,
wherein the adhesive is an adhesive including epoxysilane.

3. The barrier laminate according to Claim 1 or 2,
wherein the cyclic olefinic resin (b1) is a norbornene-based polymer whose melt flow rate MFR (230°C, 21.18 N) is from 0.2 to 17 g/10 minutes.

4. The barrier laminate according to any one of Claims 1 to 3,
wherein the olefinic resins (a1) and (c1) each independently is an ethylene-based resin or a propylene-based resin.

5. The barrier laminate according to any one of Claims 1 to 4,
wherein the thickness of the intermediate layer (B) in the multilayer film (I) is in a range of 0.5 to 10 µm.

6. The barrier laminate according to any one of Claims 1 to 5,
wherein the multilayer film (I) is obtained by lamination by a co-extrusion lamination method.

7. The barrier laminate according to any one of Claims 1 to 6,
wherein elution of a silane compound is suppressed to less than 10 µg/kg-food according to the elution test based on the regulation of Swiss Ordinance SR817.023.21.

8. The barrier laminate according to any one of Claims 1 to 6,
wherein the thickness of the intermediate layer (B) of the multilayer film (I) is from 0.5 to 5 µm.

9. The barrier laminate according to any one of Claims 1 to 6,
wherein the olefinic resin (c1) not having a cyclic structure is linear low density polyethylene.

10. A packaging material using the barrier laminate according to any one of Claims 1 to 7.

11. The packaging material according to Claim 10 is used for a food product or a medical product.

## Patentansprüche

1. Barrierelaminat, das durch Laminieren der Oberfläche einer Laminatschicht (A)-Seite eines Mehrschichtfilms (I) mit einem Substratfilm (II) unter Verwendung eines Klebstoffs gebildet ist, in dem der Mehrschichtfilm (I) durch Laminieren der Laminatschicht (A), die ein olefinisches Harz (a1), das keine cyclische Struktur hat, als Hauptkomponente umfasst, eine Zwischenschicht (B), welche 70 Masse-% oder mehr eines cyclischen olefinischen Harzes (b1), das eine Glasübergangstemperatur Tg von 70 °C bis 160 °C hat, als Harzkomponente enthält, und eine Dichtungsschicht (C), welche ein olefinisches Harz (c1), das keine cyclische Struktur hat, als Hauptkomponente umfasst, in der Reihenfolge (A)/(B)/(C) gebildet ist, und in der die Gesamtdicke des Mehrschichtfilms (I) 20 bis 50 µm ist, das Dickenverhältnis der Zwischenschicht (B) 0,5 % bis 10 % ist und die Dicke der Dichtungsschicht (C) 3 µm oder mehr ist.

2. Barrierelaminat gemäß Anspruch 1, wobei der Klebstoff ein Klebstoff ist, der Epoxysilan enthält.

3. Barrierelaminat gemäß Anspruch 1 oder 2, wobei das cyclische olefinische Harz (b1) ein Norbornen-basiertes Polymer ist, dessen Schmelzflussrate MFR (230 °C, 21,18 N) 0,2 bis 17 g/10 min beträgt.

4. Barrierelaminat gemäß einem der Ansprüche 1 bis 3, wobei die olefinischen Harze (a1) und (c1) jeweils unabhängig ein Ethylen-basiertes Harz oder ein Propylen-basiertes Harz sind.

5. Barrierelaminat gemäß einem der Ansprüche 1 bis 4, wobei die Dicke der Zwischenschicht (B) in dem Mehrschichtfilm (I) im Bereich von 0,5 bis 10 µm liegt.

6. Barrierelaminat gemäß einem der Ansprüche 1 bis 5, wobei der Mehrschichtfilm (I) durch Laminierung durch ein Co-Extrusionslaminierungsverfahren erhalten wird.

7. Barrierelaminat gemäß einem der Ansprüche 1 bis 6, wobei eine Elution einer Silanverbindung auf weniger als 10 µg/kg Nahrungsmittel entsprechend dem Elutionstest, der auf "the regulation of Swiss Ordinance SR817.023.21" basiert, unterdrückt wird.

8. Barrierelaminat gemäß einem der Ansprüche 1 bis 6, wobei die Dicke der Zwischenschicht (B) des Mehrschichtfilms (I) 0,5 bis 5 µm ist.

9. Barrierelaminat gemäß einem der Ansprüche 1 bis 6, wobei das olefinische Harz (c1), das keine cyclische Struktur hat, lineares Polyethylen niedriger Dichte ist.

10. Verpackungsmaterial, das das Barrierelaminat gemäß einem der Ansprüche 1 bis 7 verwendet.

11. Verpackungsmaterial gemäß Anspruch 10 wird für ein Nahrungsmittelprodukt oder ein medizinisches Produkt verwendet.

## Revendications

1. Stratifié de protection qui est formé par stratification de la surface d'un côté de couche de stratifié (A) d'un film multicouche (I) avec un film de substrat (II) en utilisant un adhésif, dans lequel le film multicouche (I) est formé en stratifiant la couche de stratifié (A) qui inclut une résine oléfinique (a1) n'ayant pas une structure cyclique comme composant principal, une couche intermédiaire (B) qui inclut 70 % en masse ou plus d'une résine oléfinique cyclique (b1) ayant une température de transition vitreuse Tg de 70 °C à 160 °C en tant que composant de résine, et une couche d'étanchéité (C) qui inclut une résine oléfinique (c1) n'ayant pas une structure cyclique comme composant principal dans l'ordre (A)/ (B)/ (C) ; et l'épaisseur totale du film multicouche (I) est de 20 à 50 µm, le pourcentage d'épaisseur de la couche intermédiaire (B) est de 0,5 % à 10 %, et l'épaisseur de la couche d'étanchéité (C) est de 3 µm ou plus.

2. Stratifié de protection selon la revendication 1,
dans lequel l'adhésif est un adhésif incluant de l'époxysilane.

3. Stratifié de protection selon la revendication 1 ou 2,
dans lequel la résine oléfinique cyclique (b1) est un polymère à base de norbornène dont l'indice de fluidité à chaud MFR (230 °C, 21,18 N) est de 0,2 à 17 g/10 minutes.

4. Stratifié de protection selon l'une quelconque des revendications 1 à 3,
dans lequel les résines oléfiniques (a1) et (c1) sont chacune indépendamment une résine à base d'éthylène ou une résine à base de propylène.

5. Stratifié de protection selon l'une quelconque des revendications 1 à 4,
dans lequel l'épaisseur de la couche intermédiaire (B) dans le film multicouche (I) est dans une plage de 0,5 à 10 µm.

6. Stratifié de protection selon l'une quelconque des revendications 1 à 5,
dans lequel le film multicouche (I) est obtenu par stratification par l'intermédiaire d'un procédé de stratification par coextrusion.

7. Stratifié de protection selon l'une quelconque des revendications 1 à 6,
dans lequel une élution d'un composé de silane est supprimée à moins de 10 µg/kg d'aliment selon le test d'élution basé sur la réglementation de l'ordonnance suisse SR817.023.21.

8. Stratifié de protection selon l'une quelconque des revendications 1 à 6,
dans lequel l'épaisseur de la couche intermédiaire (B) du film multicouche (I) est de 0,5 à 5 µm.

9. Stratifié de protection selon l'une quelconque des revendications 1 à 6,
dans lequel la résine oléfinique (c1) n'ayant pas de structure cyclique est du polyéthylène basse densité linéaire.

10. Matériau d'emballage utilisant le stratifié de protection selon l'une quelconque des revendications 1 à 7.

11. Matériau d'emballage selon la revendication 10, utilisé pour un produit alimentaire ou un produit médical.
